Europäisches Patentamt

**European Patent Office**

**Office européen des brevets**

(11) Numéro de publication : **0 060 367**
**B1**

# (12) FASCICULE DE BREVET EUROPÉEN

(45) Date de publication du fascicule du brevet :
05.10.83

(21) Numéro de dépôt : **81400413.1**

(22) Date de dépôt : **17.03.81**

(51) Int. Cl.³ : **E 01 H 1/04**, B 62 J 39/00,
B 62 K 11/00, E 01 H 1/08

(54) **Motocycle pour le nettoyage des sols.**

(43) Date de publication de la demande :
22.09.82 Bulletin 82/38

(45) Mention de la délivrance du brevet :
05.10.83 Bulletin 83/40

(84) Etats contractants désignés :
**AT BE CH DE GB IT LI LU NL SE**

(56) Documents cités :
**DE C   139 866
DE C   579 401
FR A   534 953
FR A   668 556
FR A   697 945
FR A 2 146 409
FR A 2 406 708
FR A 2 424 366
FR A 2 465 836
FR E     15 328
GB A   830 430
GB A 1 524 953
US A 1 369 106
US A 1 922 338
US A 3 947 912**

**OFFICIAL GAZETTE OF THE UNITED STATES
PATENT OFFICE, vol. 247, no. 3, 27-02-1918,
page 500**

(73) Titulaire : **Decaux, Jean-François
88, Boulevard Maurice-Barrès
F-92200 Neuilly-sur-Seine (FR)**

(72) Inventeur : **Decaux, Jean-François
88, Boulevard Maurice-Barrès
F-92200 Neuilly-sur-Seine (FR)**

(74) Mandataire : **Rodhain, Claude
Cabinet Claude RODHAIN 30, rue La Boétie
F-75008 Paris (FR)**

Motocycle pour le nettoyage des sols

L'invention concerne un motocycle, tel que cyclomoteur, vélomoteur ou motocyclette, équipé de moyens assurant le nettoyage du sol et plus particulièrement celui des trottoirs en les débarrassant des excréments laissés par les chiens.

Le problème soulevé par les propriétaires, peu scrupuleux, de chiens vivant en milieu urbain, n'est toujours pas résolu de façon satisfaisante malgré les efforts développés par les municipalités sous la forme d'informations, de publicité, voir de menaces pénales à l'égard de ces propriétaires. Toutes ces mesures sont restées sans effet car les usagers négligent encore, dans leur grande majorité, les caniveaux en autorisant leurs chiens à se « soulager » sur les trottoirs, les voies piétonnières ou les autres lieux publics.

Il existe déjà des véhicules pour le nettoyage des chaussées, dotés de brosses et de circuit d'eau de lavage sous-pression.

Ces véhicules sont généralement soit des véhicules automobiles de fort encombrement, ne pouvant pas circuler sur les trottoirs, soit des véhicules de plus faible encombrement mais se déplaçant à faible vitesse et gênant l'abondante circulation routière lorsqu'ils rejoignent la chaussée. En outre, s'agissant de véhicules à quatre roues, leur manipulation sur un trottoir, où circulent de nombreux piétons, s'accomode mal avec les méandres qu'il convient d'effectuer pour nettoyer efficacement toute la surface du trottoir. Enfin, ces véhicules ne sont pas adaptés au ramassage des excréments laissés par les chiens sur les trottoirs.

On connaît aussi des véhicules légers, de faible encombrement, pouvant circuler aisément entre les obstacles situés sur les trottoirs, ces véhicules pouvant se déplacer à faible vitesse lorsqu'il est opérationnel et s'adapter à la vitesse des véhicules automobiles circulant sur la chaussée lorsqu'il doit être déplacé d'un lieu de nettoyage à un autre.

De tels véhicules sont connus du FR-E-15 328 et du FR-A-2 146 409 qui cependant montrent des organes de nettoyage disposés derrière le véhicule.

Le but de l'invention est donc d'arriver à un véhicule qui est adapté plus spécialement au ramassage de détritus de faible volume. Ce problème est résolu par un motocycle selon la revendication 1.

L'invention concerne donc un motocycle destiné au nettoyage des sols notamment pour le ramassage rapide et efficace des excréments des chiens sur les trottoirs, caractérisé en ce qu'il comprend au moins un équipage, pourvu d'organes de nettoyage, monté basculant entre une position escamotée, où il est en retrait du sol, et une position opérationnelle où les organes de nettoyage sont en contact avec le sol, lesdits organes étant mobiles en rotation et étant accouplés par des moyens de transmission, au moteur du motocycle.

Un tel véhicule est donc efficace, ne gêne guère les piétons et n'entrave pas la circulation. En outre, sa maniabilité et sa vitesse de transfert le rendent hautement rentable.

Suivant un mode de réalisation préférentiel, l'équipage basculant est amené de sa position escamotée à sa position opérationnelle par simple pression du pied, des organes de rappel ramenant cet équipage dans la première position dès que cesse cette pression, ce qui permet au motocycle de pouvoir retrouver alors sa vitesse initiale pour se déplacer sur la chaussée sans gêner les usagers de la route.

Selon une variante de réalisation, le motocycle peut comporter deux équipages basculants situés de part et d'autre du cadre, ces équipages pouvant être basculés individuellement ou en commun en direction du sol.

Un motocycle selon l'invention est représenté, à titre d'exemple non limitatif, sur les figures ci-jointes dans lesquelles :

la Figure 1 est une vue en plan du motocycle lorsque les organes de nettoyage sont en position relevée ;

la Figure 2 est une vue en plan similaire à la Fig. 1, à l'exception que l'un des équipages basculants a été amené en contact avec le sol ;

la Figure 3 est une vue schématique en plan d'une des brosses de nettoyage ;

la Figure 4 est une vue de dessus de la Fig. 3.

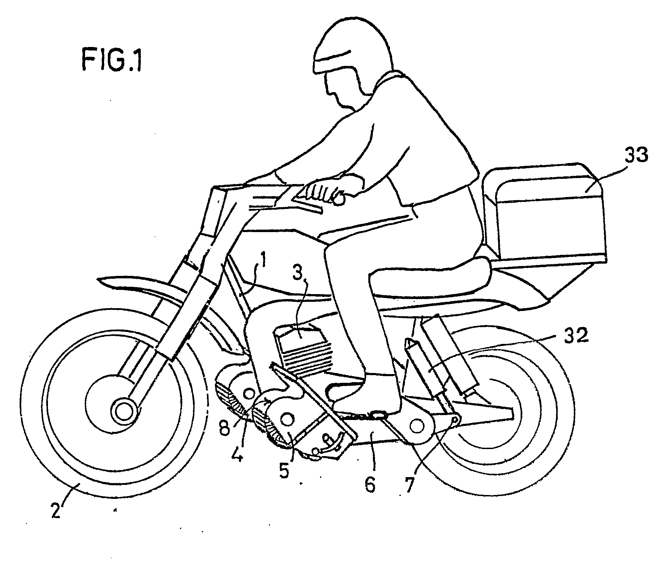

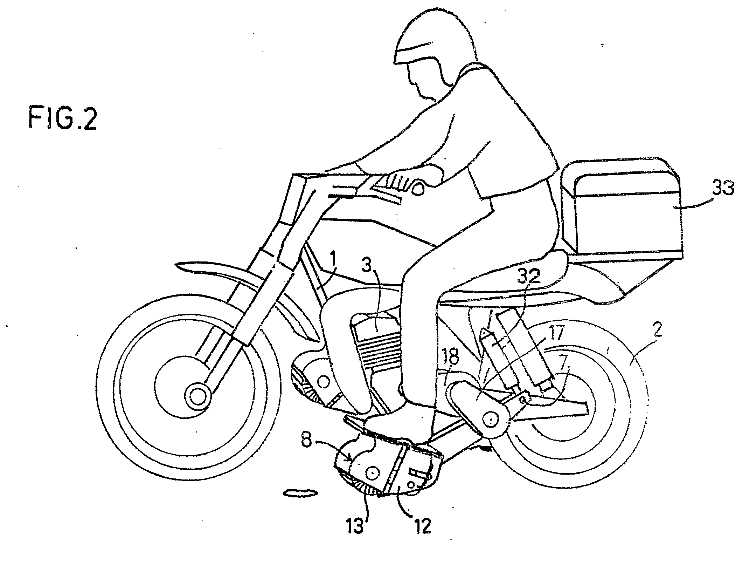

Le motocycle représenté en Fig. 1 et Fig. 2 est constitué d'une façon classique d'un cadre 1, de deux roues 2, et d'un moteur d'entraînement 3. Ce motocycle peut être un cyclomoteur de 50 cm$^3$, un vélomoteur de moins de 125 cm$^3$, ou encore une motocyclette de plus de 125 cm$^3$.

La particularité de l'invention réside dans le fait que ce motocycle est équipé, dans l'exemple de réalisation considéré, de deux équipages basculants 4 et 5 situés de part et d'autre du cadre 1, ces équipages renfermant des organes de nettoyage pouvant être amenés sélectivement en contact avec le sol.

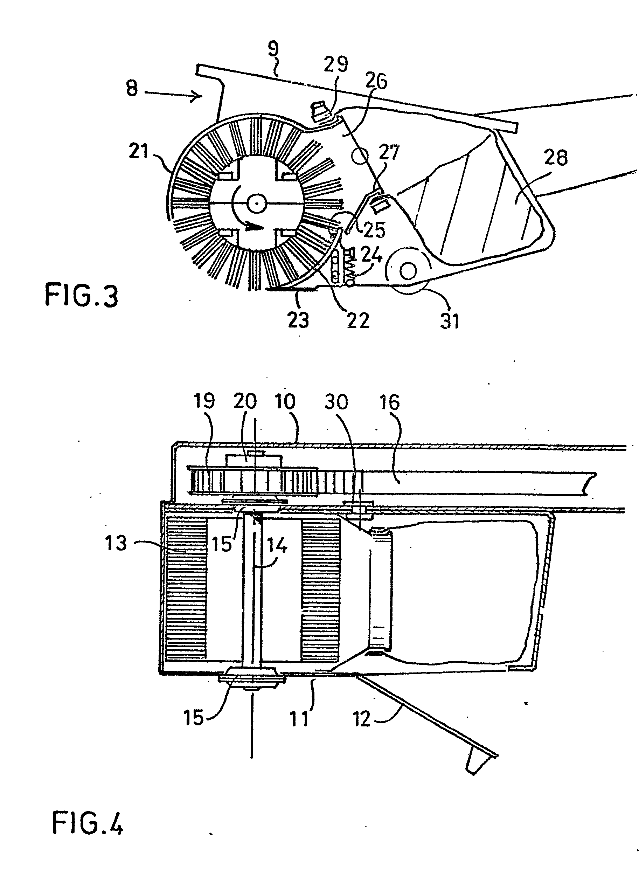

Chaque équipage est constitué d'un bras 6 monté articulé en 7 sur le cadre du motocycle, l'extrémité avant de ce bras se terminant par un carter 8 (Fig. 3) dans lequel sont logés les organes de nettoyage. Chaque carter est constitué d'une paroi supérieure 9 formant pédale et de deux flasques latéraux 10 et 11, ce dernier comportant une porte articulée 12 permettant d'avoir accès au volume intérieur de chaque carter 8. Dans chaque carter 4 et 5, est montée au moins une brosse à poils raides 13 qui constitue l'organe de nettoyage ou plus exactement de ramassage des excréments laissés par les chiens sur les trottoirs. La brosse 13 est montée rotative sur un axe 14 porté à ses deux extrémités par un roulement 15, cette brosse étant entraînée en rotation par l'entremise d'une courroie crantée 16 reliée à la prise de vitesse du moteur 3 du motocycle par deux courroies de renvoi trapézoïdales 17 et 18 (Fig. 1), la courroie crantée étant engrenée avec les dents d'un pignon 19 calé sur l'extrémité 20 de l'axe 14 de la brosse. Cette brosse est enveloppée à sa partie supérieure par un couvercle concentrique 21 et bordée à sa partie inférieure par un déflecteur 22 monté sur un patin 23 venant en contact avec le sol, ce déflecteur étant monté élastiquement mobile en direction de la brosse sur des ressorts tarés 24 comme visible en Fig. 3. Ce déflecteur présente la particularité de comporter sur sa face interne un bossage 25 dirigé vers les poils de la brosse, ce bossage étant situé à proximité d'une fenêtre d'évacuation 26 dont le bord 27 sert à la fixation d'un sac 28 destiné à récupérer les excréments entraînés par la brosse, ce sac étant situé en aval de ladite brosse et étant fixé sur le bord 27 de la fenêtre d'évacuation par des organes de fixation amovibles 29. Ces organes peuvent être constitués soit par un lien élastique ou flexible, soit par un sandow, soit par une ceinture à attache rapide.

L'équipage basculant présente par ailleurs la particularité d'être pourvu d'un organe de pivotement 30 tel que pivot, celui-ci étant destiné à conférer au carter 4 ou 5 une liberté d'oscillation telle que ledit carter puisse être déplacé angulairement par rapport au bras oscillant 6 de chaque équipage mobile. Cette oscillation est destinée à permettre au pilote de pouvoir, au choix, mettre en contact avec le sol soit la brosse de ramassage 13, soit un galet 31 situé sous la face inférieure du carter et susceptible de venir en appui sur le sol. Ainsi, et par un léger mouvement du pied, en agissant sur la pédale 9, on peut mettre en contact avec le sol soit la brosse, soit le galet, ce qui évite en particulier d'user les poils de la brosse sur des surfaces absentes de toute matière à ramasser.

Ainsi, le pilote peut abaisser sélectivement l'un, ou les deux équipages basculants afin de les amener en contact avec le sol, le déplacement de ces équipages de la position escamotée (relevée) à la position opérationnelle (en contact avec le sol) s'effectuant simplement à l'aide du pied par appui sur la pédale 9, ce déplacement ayant lieu à l'encontre de la force d'un organe de rappel 32, qui sollicite constamment vers le haut les équipages basculants afin de les ramener dans la position escamotée. Ainsi, dès que la pression sur la pédale 9 cesse, les équipages basculants remontent en position escamotée (Fig. 1).

Le fait que les sacs destinés à la récupération des excréments soient situés en aval de la brosse et tangentiellement à celle-ci, permet une récupération totale des matières jonchant le sol, celles-ci étant décrochées des poils de la brosse par le bossage 25 figurant sur les déflecteurs 22. Les poils de la brosse sont très raides de façon à pouvoir accrocher et même gratter le sol afin de venir à bout des excréments séchés ayant adhérés au sol. Ces brosses peuvent bien entendu être imbibées d'eau ou de produits désinfectants et leur action peut également être combinée à une pulvérisation d'eau préalable ou postérieure à leur action. De même, il est possible d'envisager que la brosse soit combinée à un rouleau de nettoyage situé en aval et destiné à parfaire le nettoyage de la brosse.

Les brosses étant entraînées en rotation à vive allure par le vilbrequin du moteur assurent un nettoyage efficace des trottoirs par un ramassage total des excréments jonchant ceux-ci.

Lorsque le véhicule circule sur les trottoirs, sa vitesse peut être relativement faible de façon à ne pas gêner les piétons, mais il retrouve sa vitesse initiale dès qu'il redescend sur la chaussée. Ainsi le motocycle ne gêne pas la circulation routière et peut se transférer d'un point à un autre rapidement, ce qui constitue un avantage important eu égard à la densité du trafic que l'on connaît actuellement dans les cités urbaines.

Le motocycle comporte par ailleurs un caisson 33 servant à la réception des sacs usagés 28.

Bien entendu l'invention n'est pas limitée à l'exemple de réalisation ci-dessus décrit, pour lequel on pourra prévoir d'autres variantes de réalisation, sans pour cela sortir du cadre de l'invention.

Suivant une variante de réalisation, les brosses peuvent être remplacées par des moyens de succion permettant aux équipages basculant, notamment au carter 8, de jouer le rôle des caissons d'aspiration fonctionnant par effet de ventouses. Les organes rotatifs provoquant cet effet d'aspiration peuvent être entraînés par le moteur du motocycle comme le sont les brosses rotatives.

## Revendications

1. Motocycle de ramassage de détritus de faible volume tels que les excréments de chiens, du type comprenant un support solidaire du cadre (1) du motocycle et au moins un organe de nettoyage (13) monté sur ce support et mobile entre une position de nettoyage où l'organe de nettoyage (13) est en contact avec le sol et une position de retrait, où cet organe est éloigné du sol, cet organe de nettoyage (13) étant par ailleurs accouplé par des moyens de transmission (16-17-18) à un moteur (3), caractérisé en ce que l'organe de nettoyage (13) est disposé dans un carter (8) qui, d'une part, est disposé sur au moins un côté du motocycle à proximité immédiate du repose-pied situé du même côté, et qui, d'autre part, présente une surface d'appui de pied (9), à l'aide de laquelle l'organe de nettoyage peut être mû entre lesdites positions.

2. Motocycle suivant la revendication 1, caractérisé en ce qu'il est prévu, entre le cadre (1) et l'organe de nettoyage (13), un organe de rappel (32) pour la position de retrait.

3. Motocycle suivant l'une quelconque des revendications 1 et 2, caractérisé en ce que le carter (8) est monté basculant sur le cadre (1).

4. Motocycle suivant la revendication 3, caractérisé en ce que le carter (8) est solidaire d'un bras (6) monté mobile en rotation par rapport au cadre (1).

5. Motocycle suivant la revendication 4 lorsqu'elle dépend de la revendication 2, caractérisé en ce que l'organe de rappel (32) est un vérin qui prend appui sur l'extrémité du bras (6) opposée à celle qui porte le carter (8).

6. Motocycle suivant l'une quelconque des revendications 1 à 5, caractérisé en ce que la surface d'appui de pied (9) du carter est constituée par une paroi plane supérieure.

7. Motocycle suivant l'une quelconque des revendications 1 à 6, caractérisé en ce que l'organe de nettoyage (13) est une brosse montée rotative dans le carter (8) et la face tournée vers le sol de ce carter (8) est ouverte.

8. Motocycle suivant la revendication 7, caractérisé en ce que le carter (8) comprend une partie (21) entourant la brosse et présentant à l'arrière une fenêtre d'évacuation (26) sur le bord de laquelle est fixé, par des moyens amovibles, un sac (28) de récupération.

9. Motocycle suivant la revendication 8, caractérisé en ce que la brosse rotative (13) est une brosse à poils durs et la partie (21) du carter entourant la brosse comporte un ensemble constitué d'un déflecteur (22) épousant le contour de la brosse et un patin (23) faisant face au sol, cet ensemble étant monté mobile élastiquement en direction de la brosse (13), le déflecteur (22) comportant, sur sa paroi interne, un bossage (25) situé à proximité de la fenêtre d'évacuation (26) et sur le trajet des poils de la brosse (13).

10. Motocycle suivant l'une quelconque des revendications 1 à 9, caractérisé en ce que le carter (8) comporte deux flasques latéraux (10-11) dont l'un est pourvu d'une porte articulée (12).

11. Motocycle suivant l'une quelconque des revendications 1 à 10, caractérisé en ce que le carter (8) est monté oscillant autour d'un axe (30) transversal au cadre, sur un support intermédiaire (6) qui est lui-même monté mobile par rapport au support fixe suivant le mouvement de déplacement entre lesdites positions, ce carter étant par ailleurs pourvu en aval de l'organe de nettoyage (13), d'un galet (31) d'appui au sol.

12. Motocycle suivant la revendication 7, caractérisé en ce que l'axe (14) de la brosse (13) est porté à chacune de ses extrémités par un roulement (15) et comporte un pignon d'entraînement (19) de la brosse relié aux moyens de transmission (16-17-18).

13. Motocycle suivant l'une quelconque des revendications 1 à 12, caractérisé en ce que les moyens de transmission sont constitués d'une courroie crantée (16) et de deux courroies trapézoïdales de renvoi (17-18).

14. Motocycle suivant l'une quelconque des revendications 1 à 13, caractérisé en ce que le moteur (3) d'entraînement de la brosse est constitué par le moteur du motocycle lui-même.

15. Motocycle suivant l'une quelconque des revendications 1 à 14, caractérisé en ce qu'il comprend un organe de nettoyage (13) sur chacun des deux côtés du cadre (1).

16. Motocycle suivant la revendication 7, caractérisé en ce que les brosses sont aspergées ou imbibées d'un produit de lavage et/ou de désinfectant.

17. Motocycle suivant l'une quelconque des revendications 1 à 16, caractérisé en ce qu'il comporte un caisson (33) pour la réception des sacs usagés.

18. Motocycle suivant l'une quelconque des revendications 1 à 17, caractérisé en ce que l'organe de nettoyage est constitué par un caisson d'aspiration prélevant les détritus ou excréments par succion.

## Claims

1. A motorcycle for picking up rubbish of small volume such as excrements of dogs, of the type comprising a support rigid with the frame (1) of the motorcycle and at least one cleaning means (13) mounted on this support to move between a cleaning position in which the cleaning means (13) is in contact with the ground and a withdrawn position in which the cleaning means is spaced from the ground, said cleaning means (13) being coupled by transmission means (16, 17, 18) to a motor (3) characterized in that the cleaning means (13) is disposed in a case (8) which is located on at least one side of the motorcycle in the immediate vicinity of the footrest located on the same side of the motorcycle and has a foot bearing surface (9) with the help of which the cleaning means can be moved between said positions.

2. A motorcycle according to claim 1, comprising return means (32) between the frame (1) and the cleaning means (13) for returning the cleaning means to the withdrawn position thereof.

3. A motorcycle according to the claim 1 or 2 characterized in that the case (8) is pivotally mounted on the frame (1).

4. A motorcycle according to claim 3, wherein the case (8) is rigid with an arm (6) mounted to be rotatable relative to the frame (1).

5. A motorcycle according to claim 4, when dependent from claim 2, characterized in that the return means (32) is a cylinder device which bears against the end of the arm (6) opposed to that which carries the case (8).

6. A motorcycle according to any one of the claims 1 to 5, characterized in that the foot bearing surface (9) of the case is formed by an upper planar wall.

7. A motorcycle according to any one of the claims 1 to 6, characterized in that the cleaning means (13) is a brush rotatively mounted in the case (8) and the side of the case (8) facing the ground is open.

8. A motorcycle according to claim 7, characterized in that the case (8) comprises a part (21) which surrounds the brush and has at the reat a discharge opening (26) on the edge of which opening a receiving bag (28) is secured by detachable means.

9. A motorcycle according to claim 8, characterized in that the rotary brush (13) is a brush having hard bristles and the part (21) of the case surrounding the brush comprises an assembly consisting of a deflector (22) which conforme to the contour of the brush and a skid (23) facing the ground, said assembly being mounted to be elastically movable toward the brush (13), the deflector (22) having on an inner surface thereof a boss (25) located in the vicinity of the discharge opening (26) in the path of the bristles of the brush (13).

10. A motorcycle according to any one of the claims 1 to 9, characterized in that the case (8) comprises two lateral side walls (10, 11) one of which walls is provided with a pivotal door (12).

11. A motorcycle according to anyone of the claims 1 to 10, wherein the case (8) is mounted to be pivotable about an axis (30) which is transverse to the frame on an intermediate (6) support which is mounted to be movable relative to the fixed support so as to move between said two positions, said case being provided on the downstream side of the cleaning means (13) relative to the direction of movement of the cleaning means, with a roller (31) for bearing against the ground.

12. A motorcycle according to claim 7, characterized in that the shaft (14) of the brush (13) is carried at each end by a bearing (15) and has a sprocket (19) for driving the brush and connected to the transmission means (16, 17, 18).

13. A motorcycle according to any one of the claims 1 to 12, characterized in that the transmission means comprise a notched belt (16) and two intermediate V-belts (17, 18).

14. A motorcycle according to any one of the claims 1 to 13, characterized in that the motor driving (3) the brush is formed by the motor of the motorcycle.

15. A motorcycle according to any one of the claims 1 to 14, characterized in that it comprises a cleaning means (13) on each of the two sides of the frame (1).

16. A motorcycle according to claim 7, characterized in that the brush is sprayed or soaked with a washing and or disinfeccant product.

17. A motorcycle according to any one of the claims 1 to 16, characterized in that it comprises a box (33) for receiving used bags.

18. A motorcycle according to any one of the claims 1 to 17, characterized in that the cleaning means comprises a suction box which removes the rubbish or excrements by a suction effect.

**Ansprüche**

1. Kraftrad zum Aufsammeln kleiner Abfälle, wie Hundeexkremente, das einen mit dem Rahmen (1) des Kraftrades kraftschlüssig verbundenen Träger und mindestens ein auf diesem Träger befestigtes Reinigungsorgan (13) aufweist, das zwischen einer Reinigungsstellung, in der das Reinigungsorgan (13) mit der Bodenfläche in Kontakt ist, und einer Ruhestellung, in der dieses Organ von der Bodenfläche entfernt ist, beweglich ist, welches Reinigungsorgan (13) außerdem über Transmissionseinrichtungen (16-17-18) an einen Motor (3) gekuppelt ist, dadurch gekennzeichnet, daß das Reinigungsorgan (13) in einem Gehäuse (8) angeordnet ist, das einerseits wenigstens an einer Seite des Kraftrades in unmittelbarer Nähe der auf dieser Seite befindlichen Fußauflage vorgesehen ist, und das anderseits eine Fußabstützfläche (9) aufweist, mit Hilfe derer das Reinigungsorgan zwischen den genannten Stellungen bewegt werden kann.

2. Kraftrad nach Anspruch 1, dadurch gekennzeichnet, daß zwischen dem Rahmen (1) und dem Reinigungsorgan (13) ein Rückholorgan (32) für die Ruhestellung vorgesehen ist.

3. Kraftrad nach einem der Ansprüche 1 und 2, dadurch gekennzeichnet, daß das Gehäuse (8) schwenkbar auf dem Rahmen (1) befestigt ist.

4. Kraftrad nach Anspruch 3, dadurch gekennzeichnet, daß das Gehäuse (8) kraftschlüssig mit einem drehbar am Rahmen (1) befestigten Arm (6) verbunden ist.

5. Kraftrad nach Anspruch 4, soweit dieser auf Anspruch 2 rückbezogen ist, dadurch gekennzeichnet, daß das Rückholorgan (32) ein Hydraulikzylinder ist, der sich gegen das Ende des dem das Gehäuse (8) tragenden Arm gegenüberliegenden Armes (6) abstützt.

6. Kraftrad nach einem der Ansprüche 1 bis 5, dadurch gekennzeichnet, daß die Fußabstützfläche (9) aus einer oberen, flachen Wand des Gehäuses besteht.

7. Kraftrad nach einem der Ansprüche 1 bis 6, dadurch gekennzeichnet, daß das Reinigungsorgan (13) eine drehbar im Gehäuse (8) angeordnete Bürste ist, und daß die zur Bodenfläche gerichtete Seite des Gehäuses (8) offen ist.

8. Kraftrad nach Anspruch 7, dadurch gekennzeichnet, daß das Gehäuse (8) einen die Bürste umgebenden Teil (21) und auf seiner Hinterseite ein Auswurffenster (26) aufweist, an dessen Rand mittels abnehmbarer Einrichtungen ein Sammelsack (28) befestigt ist.

9. Kraftrad nach Anspruch 8, dadurch gekennzeichnet, daß die drehbare Bürste (13) eine Bürste mit harten Borsten ist und daß der die Bürste umgebende Teil (21) des Behälters eine aus einer den Umkreis der Bürste berührenden Ablenkplatte (22) und einem zur Bodenfläche parallelen Gleitschuh (23) gebildete Einheit aufweist, die in Richtung zur Bürste (13) elastisch beweglich angeordnet ist, wobei die Ablenkplatte (22) auf ihrer inneren Wand einen in der Nähe des Auswurffensters (26) und in der Bahn der Borsten der Bürste (13) angeordneten Vorsprung (25) aufweist.

10. Kraftrad nach einem der Ansprüche 1 bis 9, dadurch gekennzeichnet, daß das Gehäuse (8) zwei seitliche Flansche (10-11) aufweist, deren einer mit einer angelenkten Türe (12) versehen ist.

11. Kraftrad nach einem der Ansprüche 1 bis 10, dadurch gekennzeichnet, daß das Gehäuse (8) auf einem Zwischenträger (6) schwingend um eine zum Rahmen querstehende Achse (30) angeordnet ist, welcher Zwischenträger entsprechend der Bewegung zwischen den genannten Stellungen mit Bezug auf den Träger beweglich angeordnet ist, wobei das Gehäuse, in Richtung zum Relnigungsorgan (13) gesehen, mit einer Bodenabstützrolle (31) versehen ist.

12. Kraftrad nach Anspruch 7, dadurch gekennzeichnet, daß die Achse (14) der Bürste (13) an jedem ihrer Enden von einem Lager (15) getragen wird und ein mit den Transmissionseinrichtungen (16-17-18) verbundenes Ritzel (19) zur Mitnahme der Bürste aufweist.

13. Kraftrad nach einem der Ansprüche 1 bis 12, dadurch gekennzeichnet, daß die Transmissionseinrichtungen aus einem mit Einschnitten versehenen Riemen (16) und aus zwei trapezoidförmigen Übertragungsriemen (17-18) bestehen.

14. Kraftrad nach einem der Ansprüche 1 bis 13, dadurch gekennzeichnet, daß der Antriebsmotor (3) der Bürste der Kraftradmotor ist.

15. Kraftrad nach einem der Ansprüche 1 bis 14, dadurch gekennzeichnet, daß es ein Reinigungsorgan (13) auf jeder der beiden Seiten des Rahmens (1) aufweist.

16. Kraftrad nach Anspruch 7, dadurch gekennzeichnet, daß die Bürsten mit einem Reinigungs- und/oder Desinfektionsmittel benetzt oder getränkt sind.

17. Kraftrad nach einem der Ansprüche 1 bis 16, dadurch gekennzeichnet, daß es mit einem Kasten (33) zur Aufnahme der gebrauchten Säcke versehen ist.

18. Kraftrad nach einem der Ansprüche 1 bis 17, dadurch gekennzeichnet, daß das Reinigungsorgan aus einem Ansaugkasten besteht, der die Abfälle oder Exkremente durch Ansaugen aufhebt.

FIG.1

FIG.2

FIG.3

FIG.4